Europäisches Patentamt

European Patent Office

Office européen des brevets

(19)

(11) **EP 0 611 647 B1**

(12) **EUROPÄISCHE PATENTSCHRIFT**

(45) Veröffentlichungstag und Bekanntmachung des Hinweises auf die Patenterteilung:
**22.09.1999 Patentblatt 1999/38**

(51) Int. Cl.$^6$: **B32B 27/32**, B65D 65/40

(21) Anmeldenummer: **94101786.5**

(22) Anmeldetag: **07.02.1994**

(54) **Niedrig siegelnde, biaxial orientierte Polyolefin-Mehrschichtfolie, Verfahren zu ihrer Herstellung und ihre Verwendung**

Low temperature-sealing, biaxially oriented polyolefin multilayer film, process for its manufacture and its use

Film multicouche biaxialement orienté et thermosoudable à basse température, procédé pour sa fabrication et son utilisation

(84) Benannte Vertragsstaaten:
**BE DE ES FR GB IT NL**

(30) Priorität: **13.02.1993 DE 4304377**

(43) Veröffentlichungstag der Anmeldung:
**24.08.1994 Patentblatt 1994/34**

(73) Patentinhaber:
**Hoechst Trespaphan GmbH**
**66539 Neunkirchen (DE)**

(72) Erfinder:
• **Murschall, Ursula, Dr.**
**D-55283 Nierstein (DE)**
• **Peiffer, Herbert, Dr.**
**D-55126 Mainz (DE)**
• **Schlögl, Gunter, Dr.**
**D-65779 Kelkheim (DE)**
• **Dries, Thomas, Dr.**
**D-55270 Schwabenheim (DE)**

(74) Vertreter:
**Luderschmidt, Schüler & Partner GbR**
**Patentanwälte,**
**Postfach 3929**
**65029 Wiesbaden (DE)**

(56) Entgegenhaltungen:
**EP-A- 0 184 094**     **EP-A- 0 263 963**
**EP-A- 0 400 456**     **DE-U- 9 017 725**
**GB-A- 1 566 239**     **US-A- 4 681 804**

• **ADOLF FRANCK 'kunststoff-kompendium' 1984 , VOGEL-BUCHVERLAG , WüRZBURG * Seite 248 - Seite 255 ***

**Beschreibung**

Die Erfindung betrifft eine polyolefinische Mehrschichtfolie, umfassend eine Basisschicht, welche Polypropylen enthält, und mindestens eine Deckschicht.

Die immer schneller laufenden Verpackungsmaschinen erfordern ebenso wie empfindliche Füllgüter (Lebensmittel, Schokolade, Gebäck) Folien mit einer niedrigen Siegelanspringtemperatur in Kombination mit einem optimalen Maschinenlaufverhalten. Im Stand der Technik sind Folien bekannt, welche Siegelanspringtemperaturen um 100 °C, teilweise sogar bis hinunter zu 87 bis 88 °C, aufweisen. Zahlreiche Schriften betreffen die Verbesserungen der Maschinengängigkeit dieser Folien.

EP-A-0 114 312 und EP-A-0 114 311 beschreiben transparente bzw. opake Polypropylenfolien mit einer Siegelanspringtemperatur von unter 100 °C und mit guter Maschinengängigkeit. Diese Folien weisen eine Deckschicht aus einer Mischung aus $C_2/C_3/C_4$-Terpolymer und $C_3/C_4$-Copolymer sowie ein niedrigmolekulares Harz, Polypropylenhomopolymer und Polydiorganosiloxan auf. Nach dieser Lehre wird der große Siegelbereich der Folie und die niedrige Siegelanspringtemperatur durch die Olefinharzzusammensetzung aus Co- und Terpolymer erzielt. Die minimale Siegelanspringtemperatur beträgt 90 °C. Die Einarbeitung von Kohlenwasserstoffharzen in die Deckschicht führt zu Harzablagerungen an den Streckwalzen bei der Herstellung. Durch diese Ablagerungen kommt es zur Streifenbildung. Die Walzen müssen häufig gereinigt werden.

Die EP-A-0 480 282 beschreibt eine beidseitig niedrig siegelnde biaxial orientierte Polyolefin-Mehrschichtfolie, deren Basisschicht ein peroxidisch abgebautes Propylenhomopolymerisat enthält und deren Deckschichten Mischungen aus $C_2/C_3/C_4$-Terpolymer und $C_2/C_3$-Copolymer sowie eine Kombination von $SiO_2$ und Polydialkylsiloxan enthalten. Das Polydialkylsiloxan ist hochviskos und wird in Form eines Masterbatches zugegeben. Die Siegelanspringtemperatur beträgt 88°C.

Das Gebrauchsmuster G 90 17 725.8 beschreibt eine einseitig niedrigsiegelnde, metallisierbare, biaxial orientierte Polyolefin-Mehrschichtfolie. Die Basisschicht ist von einer Seite von einer Siegelschicht und von der anderen Seite von einer metalliserbaren Oberflächenschicht umgeben. Die Basisschicht enthält ein peroxidisch abgebautes Propylenhomopolymerisat und ein Antistatikum. Die Siegelschicht enthält ein Ethylen-Propylen-Butylen-Terpolymeres und ein Propylen-Butylen-Copolymeres. Die metallisierbare Oberflächenschicht enthält ein Ethylen-Propylen-Copolymeres, wobei diese metallisierbare Oberflächenschicht coronabehandelt ist und eine Dicke von größer 0,5 μm aufweist.

Die EP-A-0 263 963 beschreibt eine opake Polyolefinfolie mit einer Basisschicht aus Propylenpolymeren und Siegelschichten aus siegelbaren Olefinpolymeren. In einer der beiden Siegelschichten ist 0,5 bis 3 Gew.-%, bezogen auf die Schicht Polydialkylsiloxan inkorporiert. Diese Schicht ist nicht coronabehandelt. Die andere Siegelschicht ist coronabehandelt und hat Polydialkylsiloxan nicht inkorporiert, sondern auf der äußeren Oberfläche dieser Schicht vorliegen, das beim Kontakt der polydialkylsiloxan-inkorporierten Siegelschicht mit der anderen Siegelschicht auf diese übertragen worden ist. Sie eignet sich insbesondere als Verpackungsfolie auf schnellaufenden Verpackungsmaschinen.

US 4,681,804 beschreibt eine mehrschichtige Polymerblasfolie mit guten Hot-Tack Eigenschaften, niedriger Siegelanspringtemperatur und hoher Transparenz. Die Folie wird bei Raumtemperatur gealtert. Die Basisschicht enthält Propylenpolymer. Die Deckschicht besteht aus einem Polymerblend, welches Buten-1-Propylen-Copolymer mit einem Comonomergehalt von 10-25 Gew.-% und Polypropylen enthält.

Des weiteren sind im Stand der Technik siegelfähige Deckschicht aus $C_2/C_3$-Copolymeren sowie aus $C_2/C_3/C_4$-Terpolymeren bekannt. Diese Folien haben alle Siegelanspringtemperaturen von über 100°C.

Der Erfindung liegt die Aufgabe zugrunde, eine Mehrschichtfolie zur Verfügung zu stellen, welche mindestens einseitig eine minimale Siegelanspringtemperatur von unter 84°C aufweist. Die Folie soll gleichzeitig gute Laufeigenschaften auf schnellen automatischen Verpackungsmaschinen aufweisen. Für transparente Ausführungsformen der Folie ist eine geringe Trübung gefordert.

Erfindungsgemäß wird diese Aufgabe gelöst durch eine Folie der eingangs genannten Gattung, deren kennzeichnende Merkmale darin bestehen, daß die Deckschicht mindestens 70-100 Gew.-%, bezogen auf das Gewicht der Deckschicht niedrig kristallines $C_3/C_4$-Copolymer mit einem $C_3$-Gehalt von 60-85 Gew.-% und einem $C_4$-Gehalt von 15-40 Gew.-%, jeweils bezogen auf das Copolymer enthält, und die Deckschicht eine Siegelanspringtemperatur von kleiner 84°C aufweist und die Dicke der Deckschicht 0,4-1,5 μm beträgt.

Je nach ihrem vorgesehenen Einsatzgebiet kann die jeweilige Ausführungsform der Folie transparent, matt, opak, weiß oder weiß-opak sein.

Die Kernschicht der erfindungsgemäßen Mehrschichtfolie enthält im wesentlichen ein Propylenpolymer oder eine Polypropylenmischung.

Das Polypropylenpolymere enthält zum überwiegenden Teil (mindestens 90 %) Propylen und besitzt einen Schmelzpunkt von 140°C oder höher, vorzugsweise 150 bis 170°C. Isotaktisches Homopolypropylen mit einem n-heptanlöslichen Anteil von 6 Gew.-% und weniger, bezogen auf das isotaktische Homopolypropylen, Copolymere von Ethylen und Propylen mit einem Ethylengehalt von 10 Gew.-% oder weniger, Copolymere von Propylen mit $C_4$-$C_8$-α-

2

Olefinen mit einem $\alpha$-Olefingehalt von 10 Gew.-% oder weniger stellen bevorzugte Propylenpolymere für die Kernschicht dar, wobei isotaktisches Homopolypropylen besonders bevorzugt ist. Die angegebenen Gewichtsprozente beziehen sich auf das jeweilige Copolymer. Das Propylenpolymere der Kernschicht hat im allgemeinen einen Schmelzflußindex von 0,5 g/10 min bis 8 g/10 min, vorzugsweise 2 g/10 min bis 5g/10 min, bei 230 °C und einer Kraft von 21,6 N (DIN 53 735). Des weiteren ist eine Mischung aus den genannten Propylenhomo- und/oder -copolymeren und/oder anderen Polyolefinen, insbesondere mit 2 bis 6 C-Atomen, geeignet, wobei die Mischung mindestens 50 Gew.-%, insbesondere mindestens 75 Gew.-%, Propylenpolymerisat enthält. Geeignete andere Polyolefine in der Polymermischung sind Polyethylene, insbesondere HDPE, LDPE und LLDPE, wobei der Anteil dieser Polyolefine jeweils 15 Gew.-%, bezogen auf die Polymermischung, nicht übersteigt.

Gegebenenfalls kann das in der Kernschicht eingesetzte Polypropylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

MFI$_1$ = Schmelzflußindex des Polypropylenpolymeren vor dem Zusatz des organischen Peroxids
MFI$_2$ = Schmelzflußindex des peroxidisch abgebauten Polypropylenpolymeren

Im allgemeinen liegt der Abbaufaktor A des eingesetzten Polypropylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Opake, weiße oder weiß-opake Ausführungsformen der Folien enthalten in der Kernschicht zusätzlich Füllstoffe in einer Menge von 5 bis 20 Gew.-%, bezogen auf das Gesamtgewicht der Folie.

Bei den Füllstoffen der Basisschicht handelt es sich um die üblichen anorganischen und/oder organischen, mit Polypropylen unverträglichen Materialien. Anorganische Füllstoffe sind bevorzugt, insbesondere geeignet sind Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und/oder Titandioxid, worunter Calciumcarbonat, Siliciumdioxid, Titandioxid oder Mischungen davon bevorzugt eingesetzt werden. Calciumcarbonat (Kreide) ist besonders bevorzugt. Als organische Füllstoffe kommen die üblicherweise verwendeten, mit dem Polymeren der Basisschicht unverträglichen Polymeren in Frage, insbesondere solche wie Polyester, Polystyrole, Polyamide, halogenierte organische Polymere, wobei Polyester wie beispielsweise Polybutylenterephthalate bevorzugt sind. Die Füllstoffmenge der Basisschicht, insbesondere die des CaCO$_3$, beträgt erfindungsgemäß 5 bis 20 Gew.-%, vorzugsweise 10 bis 15 Gew.-%, bezogen auf das Gesamtgewicht der Folie. Die mittlere Teilchengröße, insbesondere die des CaCO$_3$, liegt im Bereich von 2 bis 5 µm, vorzugsweise im Bereich von 3 bis 4 µm.

Schon mit einem relativ geringen Füllstoffgehalt von 9 bis 13 Gew.-% wird eine Dichte der opaken Ausführungsformen von kleiner 0,7 g/cm$^3$ erzielt. Im allgemeinen liegt die Dichte der erfindungsgemäßen opaken Folie im wünschenswerten Bereich von 0,4 bis 0,6 g/cm$^3$.

Neben dem bevorzugten Calciumcarbonat ist als weiteres Kernschichtadditiv, wenn vorhanden, Titandioxid geeignet, welches gegebenenfalls in Kombination mit CaCO$_3$ in der Basisschicht eingesetzt wird. In bevorzugter Ausführungsform bestehen die Titandioxidteilchen zu mindestens 95 Gew.-% aus Rutil. Die Titandioxidteilchen werden bevorzugt mit einem Überzug aus anorganischen Oxiden eingesetzt, wie er üblicherweise als Überzug für TiO$_2$-Weißpigment in Papieren oder Anstrichmitteln zur Verbesserung der Lichtechtheit verwendet wird. Zu den besonders geeigneten anorganischen Oxiden gehören die Oxide von Aluminium, Silicium, Zink oder Magnesium oder Mischungen aus zwei oder mehreren dieser Verbindungen. Sie werden aus wasserlöslichen Verbindungen, z. B. Alkali-, insbesondere Natriumaluminat, Aluminiumhydroxid, Aluminiumsulfat, Aluminiumnitrat, Natriumsilikat oder Kieselsäure, in der wäßrigen Suspension ausgefällt. TiO$_2$-Partikel mit einem Überzug werden z. B. in der EP-A-0 078 633 und EP-A-0 044 515 beschrieben.

Gegebenenfalls enthält der Überzug auch organische Verbindungen mit polaren und unpolaren Gruppen. Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie Polydimethylsiloxan und Polymethylhydrogensiloxan.

Der Überzug auf den TiO$_2$-Teilchen besteht gewöhnlich aus 1 bis 12 g, insbesondere 2 bis 6 g, anorganischer Oxide, gegebenenfalls sind zusätzlich 0,5 bis 3 g, insbesondere 0,7 bis 1,5 g, organische Verbindungen, bezogen auf

100 g $TiO_2$-Teilchen, enthalten. Der Überzug wird auf die Teilchen in wäßriger Suspension aufgebracht. Als besonders vorteilhaft hat es sich erwiesen, wenn die $TiO_2$-Teilchen mit $Al_2O_3$ oder mit $Al_2O_3$ und Polydimethylsiloxan beschichtet sind.

Der Anteil an Titandioxid in der Kernschicht - sofern vorhanden - beträgt 1 bis 9 Gew.-%, bevorzugt 3 bis 5 Gew.-%, bezogen auf das Gesamtgewicht der Folie. Die mittlere Teilchengröße ist sehr klein und liegt vorzugsweise bei 0,15 bis 0,30 μm, wobei sich die angegebene Teilchengröße auf die beschichteten Teilchen bezieht.

$TiO_2$ findet dann bevorzugt zusätzlich zu $CaCO_3$ Verwendung in der Basisschicht, wenn ein weiß-opakes Aussehen der Folie gewünscht ist. Üblicherweise zeigen Folien mit einer nur füllstoffhaltigen Basisschicht ein trübes, sogenanntes opakes Aussehen, welches durch Streuprozesse an den Vakuolen der Basisschicht entsteht. Davon zu unterscheiden ist ein weißes Aussehen, welches durch Einfärbungen durch Pigmente, vorzugsweise $TiO_2$, erzielt wird.

Weiterhin kann die Kernschicht gegebenenfalls ein niedermolekulares Harz enthalten, dessen Anteil 1 bis 30 Gew.-%, vorzugsweise 2 bis 10 Gew.-%, beträgt. Der Erweichungspunkt des Harzes liegt zwischen 130 und 180 °C (gemessen nach DIN 1995-U4, entspricht ASTM E-28), vorzugsweise zwischen 140 und 160 °C. Unter den zahlreichen niedrigmolekularen Harzen sind die Kohlenwasserstoffharze bevorzugt, und zwar in Form der Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben). Geeignete Erdölharze sind in zahlreichen Schriften beschrieben wie beispielsweise EP-A-0 180 087, auf die hier ausdrücklich Bezug genommen wird.

Des weiteren ist es bevorzugt, der Basisschicht Antistatika wie beispielsweise tertiäre aliphatische Amine oder Glycerinmonostearat zuzusetzen. Art und Menge der Antistatika werden nachstehend im einzelnen beschrieben.

Die erfindungsgemäße Mehrschichtfolie umfaßt neben der Kernschicht mindestens eine niedrig siegelnde Deckschicht, deren minimale Siegelanspringtemperatur unter 84 °C liegt. Die niedrig siegelnde Deckschicht enthält eine niedrig kristalline $C_3/C_4$-Olefinharzzusammensetzung, welche durch die folgenden Angaben charakterisiert werden kann:

| | |
|---|---|
| Schmelztemperatur: | <130 °C, vorzugsweise 105 bis 120 °C |
| Rekristallisationstemperatur: | <80 °C, vorzugsweise 55 bis 80 °C |
| Schmelzenthalpie: | <67 J/g, vorzugsweise 50 bis 60 J/g |
| $C_3$-Gehalt: | 60 bis 85 Gew.-%, vorzugsweise 70 bis 80 Gew.-%, jeweils bezogen auf das Gewicht des Copolymeren, bzw. 60 bis 85 Mol-%, vorzugsweise 70 bis 80 Mol-%, jeweils bezogen auf das Copolymere |
| $C_4$-Gehalt: | 15 bis 40 Gew.-%, vorzugsweise 20 bis 30 Gew.-%, jeweils bezogen auf das Gewicht des Copolymeren, bzw. 15 bis 40 Mol-%, vorzugsweise 20 bis 30 Mol-%, jeweils bezogen auf das Copolymere |

Insbesondere ist eine Olefinharzzusammensetzung bevorzugt, deren Schmelztemperatur 110,6 °C, deren Rekristallisationstemperatur 60 °C und deren Schmelzenthalpie 56,7 J/g beträgt. Die Siegelanspringtemperatur der Deckschicht liegt vorzugsweise im Bereich von 60 bis 84 °C, insbesondere im Bereich von 65 bis 80 °C.

In einer bevorzugten Ausführungsform der Mehrschichtfolie enthält die Deckschicht die niedrig kristalline Olefinharzzusammensetzung als Hauptkomponente, d. h. zu mindestens 50 Gew.-%; bevorzugt beträgt deren Anteil 70 bis 100 Gew.-%, insbesondere 90 bis 98 Gew.-% (jeweils bezogen auf das Gewicht der Deckschichtzusammensetzung). Weiterhin ist es bevorzugt, der erfindungsgemässen Deckschicht ein Antiblockmittel zuzusetzen. Art und Menge der Antiblockmittel werden nachstehend beschrieben.

Die Mehrschichtfolie ist mindestens zweischichtig und umfaßt als wesentliche Schichten immer die Kernschicht und mindestens eine erfindungsgemäße Deckschicht. Je nach ihrem vorgesehenen Verwendungszweck kann die Folie eine weitere Deckschicht und/oder weitere Zwischenschichten aufweisen. Beidseitige Deckschichten können nach ihrem Aufbau, ihrer Zusammensetzung und ihrer Dicke grundsätzlich gleich oder verschieden sein, d. h. die zweite Deckschicht kann sowohl die gleiche niedrig kristalline Olefinharzzusammensetzung wie vorstehend beschrieben oder andere bekannte siegelfähige Propylenpolymere wie beispielsweise $C_2/C_3$-Copolymere, $C_2/C_3/C_4$-Terpolymere oder Mischungen daraus oder nicht siegelfähige Homopolymere enthalten.

Des weiteren kann die erfindungsgemäße Mehrschichtfolie ein- und/oder beidseitig Zwischenschichten aufweisen. Zwischenschichten sind insbesondere für opake Ausführungsformen bevorzugt und enthalten dann bevorzugt vorstehend beschriebenes $TiO_2$ als Additiv.

Die Dicke der erfindungsgemäßen niedrig siegelnden Deckschicht beträgt 0,4 bis 1,5 μm. Die Gesamtdicke der Folie richtet sich nach ihrem beabsichtigten Verwendungszweck und kann innerhalb weiter Grenzen variieren. Im allgemeinen liegt die Gesamtdicke im Bereich von 5 bis 150 μm, vorzugsweise im Bereich von 10 bis 100 μm, insbesondere im Bereich von 15 bis 70 μm.

Um bestimmte Eigenschaften der erfindungsgemäßen Polypropylenfolie noch weiter zu verbessern, können die Kernschicht und die Deckschicht/en neben der beschriebenen erfindungswesentlichen Additivkombination weitere Zusätze, welche die wesentlichen Folieneigenschaften nicht beeinträchtigen, in einer jeweils wirksamen Menge enthalten, vorzugsweise Gleitmittel und/oder Stabilisatoren und/oder Neutralisationsmittel, die mit den Polymeren der Kernschicht und der Deckschicht/en verträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,1 bis 3 Gew.-%. Besonders geeignet ist der Zusatz von höheren aliphatischen Säureamiden im Bereich von 0,15 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,3 bis 2,0 Gew.-% bevorzugt, insbesondere Polydimethylsiloxane mit einer Viskosität von 10 000 bis 1 000 000 $mm^2$/s.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 µm, einer absoluten Teilchengröße von kleiner 10 µm und einer spezifischen Oberfläche von mindestens 40 $m^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere oder die Polymermischung der einzelnen Schichten in einem Extruder komprimiert und verflüssigt, wobei die gegebenenfalls zugesetzten Additive bereits im Polymer enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. In Längsrichtung wird vorzugsweise 4:1 bis 7:1 und in Querrichtung vorzugsweise 6:1 bis 11:1 gestreckt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich ihre Thermofixierung (Wärmebehandlung) an, wobei die Folie etwa 0,5 bis 10 s lang bei einer Temperatur von 120 bis 170 °C, vorzugsweise 140 bis 160 °C, gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie auch abgekühlt und verfestigt wird, bei einer Temperatur von 10 bis 90 °C zu halten, bevorzugt 20 bis 60 °C.

Darüber hinaus wird die Längsstreckung vorteilhafterweise bei einer Temperatur von weniger als 150 °C, vorzugsweise im Bereich von 110 bis 140 °C, und die Querstreckung bei einer Temperatur größer 140 °C, vorzugsweise bei 145 bis 180 °C, durchgeführt. Die Folie wird auf die notwendige Strecktemperatur mittels eines Luftheizkastens gebracht.

Gegebenenfalls kann/können wie oben erwähnt nach der biaxialen Streckung eine oder beide Oberfläche/n der Folie nach einer der bekannten Methoden corona- oder flammbehandelt werden.

Bei der Coronabehandlung wird so vorgegangen, daß die Folie zwischen zwei als Elektroden dienenden Leiterelementen hindurchgeführt wird, wobei zwischen den Elektroden eine so hohe Spannung, meist Wechselspannung (etwa 10 000 V und 10 000 Hz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen. Die Behandlungsintensitäten liegen im üblichen Rahmen, wobei 38 bis 45 mN/m bevorzugt sind.

Bei der Flammbehandlung wird die Folie über eine Kühlwalze geführt, oberhalb derer ein Gasbrenner angeordnet ist. Die Folie wird durch eine Nipwalze satt auf die Kühlwalze gepreßt. Das aus dem Brenner ausströmende Gas wird entzündet und bildet etwa 5 bis 10 mm große Flammen. Der oxydierende Teil der Flamme trifft dabei auf der Folienoberfläche auf und sorgt für eine Erhöhung der Oberflächenenergie der Folie. Sie liegt auch hier im üblichen Rahmen.

Die erfindungsgemäße Folie zeichnet sich durch eine außergewöhnlich niedrige Siegelanspringtemperatur aus, wobei dennoch eine gute Siegelnahtfestigkeit erzielt wird. Damit wird eine Verpackungsfolie zur Verfügung gestellt, welche insbesondere für schnellaufende Verpackungsmaschinen besonders geeignet ist. Die ungewöhnlich niedrige Siegelanspringtemperatur eröffnet jedoch auch neue Anwendungsbereiche, z. B. als Etikettenfolie ohne zusätzlichen Haftvermittler.

Die Erfindung wird durch die nachfolgenden Beispiele näher erläutert:

## Beispiel 1

Es wurde durch Coextrusion und anschließende stufenweise Orientierung in Längs- und Querrichtung eine dreischichtige Folie mit einer Gesamtdicke von 20 µm und einem ABC-Schichtaufbau hergestellt, d. h. die Basisschicht B ist von einer Deckschicht A und einer Deckschicht C umgeben. Vor der Aufrollung wurde die Folie auf der C-Seite coronabehandelt. Die Oberflächenspannung betrug auf dieser Seite infolge der Coronabehandlung 39 bis 40 mN/m.

Alle Schichten enthielten zur Stabilisierung 0,12 Gew.-% Pentaerythrithyl-Tetrakis-4-(3,5-ditertiärbutyl-4-hydroxyphenyl)-propionat (®Irganox 1010) und als Neutralisationsmittel 0,06 Gew.-% Calciumstearat.

Die Basisschicht B bestand im wesentlichen aus einem Polypropylenhomopolymeren mit einem n-heptanlöslichen Anteil von 3,5 Gew.-% und einem Schmelzpunkt von 162 °C. Der Schmelzflußindex des Polypropylenhomopolymeren betrug 3,4 g/10 min bei 230 °C und 21,6 N Belastung (DIN 53 735). Die Basisschicht enthielt 0,15 Gew.-% Erucasäureamid mit einem Schmelzpunkt von 78 bis 82 °C.

Die polyolefinische Deckschicht A bestand im wesentlichen aus einem statistischen Propylen-Buten-1-Copolymerisat (®Tafmer XR 110 T) mit einem Propylengehalt von 74,3 Mol-%, einem Buten-1-Gehalt von 25,7 Mol-%, bezogen auf das Copolymere, einer Schmelztemperatur von 110,6 °C und einer Rekristallisationstemperatur von 60 °C. Die Deckschicht A enthielt 0,35 Gew.-% des Antiblockmittels Siliciumdioxid mit einem mittleren Teilchendurchmesser von 4 µm. Die Deckschichtdicke betrug 0,8 µm.

Die polyolefinische Deckschicht C bestand im wesentlichen aus Ethylen-Propylen-Buten-1-Terpolymeren mit einem Gehalt von 3,5 Gew.-% Ethylen, 88,5 Gew.-% Propylen und 8 Gew.-% Buten-1. Das Terpolymere enthielt 0,30 Gew.-% Siliciumdioxid mit einem mittleren Teilchendurchmesser von 4 µm. Die Dicke der Deckschicht betrug 0,8 µm.

## Beispiel 2

Beispiel 1 wurde wiederholt. Die polyolefinische Deckschicht C, die coronabehandelt wurde, bestand im wesentlichen aus einem statistischen Propylen-Buten-1-Copolymerisat mit einem Gehalt von 74,3 Mol-% Propylen und 25,7 Mol-% Buten-1. Das Copolymere enthielt 0,35 Gew.-% eines Siliciumdioxids mit einem mittleren Teilchendurchmesser von 4 µm. Die Dicke der Deckschicht betrug 0,9 µm.

## Vergleichsbeispiel 1

Beispiel 1 wurde wiederholt. Die polyolefinische Deckschicht A bestand im wesentlichen aus einem Ethylen-Propylen-Buten-1-Terpolymeren mit einem Gehalt von 3,5 Gew.-% Ethylen, 88,5 Gew.-% Propylen und 8 Gew.-% Buten-1. Die Deckschicht enthielt 0,35 Gew.-% des Antiblockmittels Siliciumdioxid mit einem mittleren Teilchendurchmesser von 4 µm. Die Deckschichtdicke betrug 0,8 µm.

## Vergleichsbeispiel 2

Beispiel 1 wurde wiederholt. Die polyolefinischen Deckschichten A und C bestanden im wesentlichen aus einem Ethylen-Propylen-Copolymeren mit einem Gehalt von 4,5 Gew.-% Ethylen und 95,5 Gew.-% Propylen. Die Deckschichten A und C enthielten jeweils 0,35 Gew.-% Siliciumdioxid mit einem mittleren Teilchendurchmesser von 4 µm. Die Deckschichtdicke betrug jeweils 0,9 µm. Die Deckschicht C wurde coronabehandelt, so daß die Oberflächenspannung dieser Seite zwischen 39 und 40 mN/m lag.

Die Eigenschaften der Folien gemäß den Beispielen und Vergleichsbeispielen sind in der nachstehenden Tabelle zusammengestellt.

Zur Charakterisierung der Rohstoffe und der Folien wurden die folgenden Meßmethoden benutzt:

6

Schmelzflußindex (MFI)

DIN 53 735 bei 21,6 N Belastung und 230 °C.

Schmelzpunkt

DSC-Messung, Maximum der Schmelzkurve, Aufheizgeschwindigkeit 20 °C/min.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Siegelnahtfestigkeit bei 100 °C

Zur Bestimmung wurden zwei 15 mm breite Folienstreifen übereinandergelegt und bei 100 °C, einer Siegelzeit von 0,5 s und einem Siegeldruck von 10 mm$^2$ (Gerät: Brugger Typ NDS, einseitig beheizte Siegelbacke) versiegelt. Die Siegelnahtfestigkeit wurde nach der T-Peel-Methode bestimmt.

Bestimmung der Siegelanspringtemperatur:

Mit dem Siegelgerät HSG/ET der Fa. Brugger werden heißgesiegelte Proben (Siegelnaht 20 mm x 100 mm) hergestellt, indem eine Folie bei unterschiedlichen Temperaturen mit Hilfe zweier beheizter Siegelbacken bei einem Siegeldruck von 10 N/cm$^2$ und einer Siegeldauer von 0,5 s gesiegelt wird. Aus den gesiegelten Proben werden Prüfstreifen von 15 mm Breite geschnitten. Die T-Siegelnahtfestigkeit, d. h. die zur Trennung der Prüfstreifen erforderliche Kraft, wird mit einer Zugprüfmaschine bei 200 mm/min Abzugsgeschwindigkeit bestimmt, wobei die Siegelnahtebene einen rechten Winkel mit der Zugrichtung bildet. Die Siegelanspringtemperatur (oder minimale Siegeltemperatur) ist die Temperatur, bei der eine Siegelnahtfestigkeit von mindestens 0,5 N/15 mm erreicht wird.

TABELLE

| | Trübung 4lagig [%] | Glanz Meßwinkel 20° | | minimale Siegeltemperatur(15 N/cm$^2$; 0,5 s) [°C] | | Siegelnahtfestigkeit bei 100 °C, 1,5 N/cm$^2$, 0,5 s [N/15mm] | |
|---|---|---|---|---|---|---|---|
| | | A-Seite | C-Seite | A-Seite | C-Seite | A/A-Seite | A/C-Seite |
| B1 | 19 | 110 | 108 | 74 | 112 | 2,1 | 1,4 |
| B2 | 21 | 109 | 107 | 74 | 82 | 2,1 | 1,8 |
| VB1 | 20 | 108 | 106 | 108 | 112 | keine Siegelung | keine Siegelung |
| VB2 | 19 | 107 | 105 | 120 | 122 | keine Siegelung | keine Siegelung |
| B = Beispiel VB = Vergleichsbeispiel | | | | | | | |

**Patentansprüche**

1. Biaxial orientierte Polyolefinische Mehrschichtfolie, umfassend eine Basisschicht, welche Polypropylen enthält, und mindestens eine Deckschicht, dadurch gekennzeichnet, daß die Deckschicht mindestens 70 - 100 Gew.-% bezogen auf das Gewicht der Deckschicht, niedrig kristallinens $C_3/C_4$-Copolymer mit einem $C_3$-Gehalt von 60 - 85 Gew.- % und einem $C_4$-Gehalt von 15 - 40 Gew.-%, jeweils bezogen auf das Copolymer enthält und die Deckschicht eine Siegelanspringtemperatur von kleiner 84°C aufweist und die Dicke der Deckschicht 0,4 - 1,5 μm beträgt.

**2.** Mehrschichtfolie nach Anspruch 1, dadurch gekennzeichnet, daß die Siegelanspringtemperatur im Bereich von 60 bis 80°C liegt und das Copolymer eine Schmelztemperatur von kleiner 130°C, vorzugsweise 105 bis 120°C, aufweist.

**3.** Mehrschichtfolie nach Anspruch 1 und/oder 2, dadurch gekennzeichnet, daß das Copolymer eine Rekristallisationstemperatur von kleiner 80°C, vorzugsweise 55 bis 70°C, und eine Schmelzenthalpie von < 67 J/g, vorzugsweise 50 bis 60 J/g, aufweist.

**4.** Mehrschichtfolie nach einem oder mehreren der Ansprüche 1 bis 3, dadurch gekennzeichnet, daß das Copolymer einen Propylengehalt von 70 bis 80 Mol-%, vorzugsweise 75 Mol-%, und einen Buten-1-Gehalt von 20 bis 30 Mol-%, vorzugsweise 25 Mol-%, jeweils bezogen auf das Copolymer, aufweist.

**5.** Mehrschichtfolie nach einem oder mehreren der Ansprüche 1 bis 4, dadurch gekennzeichnet, daß sie transparent ist.

**6.** Mehrschichtfolie nach einem oder mehreren der Ansprüche 1 bis 4, dadurch gekennzeichnet, daß sie opak ist.

**7.** Mehrschichtfolie nach einem oder mehreren der Ansprüche 1 bis 6, dadurch gekennzeichnet, daß die Basisschicht ein Antistatikum, vorzugsweise tertiäres aliphatisches Amin, und die Deckschicht ein Antiblockmittel, vorzugsweise $SiO_2$ einer Teilchengröße von 4 bis 6 µm, enthält.

**8.** Verfahren zur Herstellung der Mehrschichtfolie nach Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 10 und 90 °C liegt, abgezogen wird, die Folie biaxial gestreckt wird mit einem Längsstreckverhältnis von 4:1 bis 7:1 und einem Querstreckverhältnis von 6:1 bis 11:1, die biaxial gestreckte Folie thermofixiert, gegebenenfalls coronabehandelt und anschließend aufgewickelt wird.

**9.** Verwendung der Mehrschichtfolie gemäß einem oder mehreren der Ansprüche 1 bis 7 als Verpackungsfolie.

**10.** Verwendung der Mehrschichtfolie gemäß einem oder mehreren der Ansprüche 1 bis 7 zur Herstellung von Laminaten, vorzugsweise von Laminaten mit Papier, Pappe, Metallen, metallisierten Kunststoffolien und Kunststoffolien.

**11.** Laminate, enthaltend eine Mehrschichtfolie gemäß einem oder mehreren der Ansprüche 1 bis 7.

**12.** Verpackungen, enthaltend eine Mehrschichtfolie gemäß einem oder mehreren der Ansprüche 1 bis 7.

**Claims**

**1.** A biaxally orientated polyolefinic multi-layer film comprising a base layer which contains polypropylene and at least one outer layer characterised in that the outer layer contains at least 70 to 100% by weight, in relation to the weight of the outer layer, of low crystalline $C_3/C_4$-copolymer with a $C_3$ content of 60 to 85% by weight and a $C_4$ content of 15 to 40% by weight respectively related to the copolymer, the outer layer having a sealing minimum temperature of less than 84°C while the thickness of the outer layer amounts to 0.4 to 1.5 µm.

**2.** A multi-layer film according to claim 1, characterised in that the minimum sealing temperature is in the range from 60 to 80°C and the copolymer has a melting temperature of less than 130°C and preferably 105 to 120°C.

**3.** A multi-layer film according to claim 1 and/or 2, characterised in that the copolymer has a recrystallisation temperature of less than 80°C, preferably 55 to 70°C, and a melting enthalpy of <67 J/g and preferably 50 to 60 J/g.

**4.** A multi-layer film according to one or more of claims 1 to 3, characterised in that the copolymer comprises a propylene content of 70 to 80 mol%, preferably 75 mol% and a butene-1 content of 20 to 30 mol% and preferably 25mol%, respectively related to the copolymer.

**5.** A multi-layer film according to one or more of claims 1 to 4, characterised in that it is transparent.

**6.** A multi-layer film according to one or more of claims 1 to 4, characterised in that it is opaque.

7. A multi-layer film according to one or more of claims 1 to 6, characterised in that the base layer contains an anti-static agent, preferably tertiary aliphatic amine, while the outer layer contains an anti-blocking agent, preferably $SiO_2$ having a particle size of 4 to 6 µm.

8. A method of producing the multi-layer film according to claim 1 in which the melts corresponding to the individual layers of the film are coextruded through a flat nozzle, a coextruded film is drawn off over a pull-off roll, the temperature of which is between 10 and 90°C, the film is biaxially stretched with a longitudinal stretching ratio of 4:1 to 7:1 and a transverse stretching ratio of 6:1 to 11:1, the biaxially stretched film is heat-set, possibly corona treated and then wound up.

9. Use of the multi-layer film according to one or more of claims 1 to 7 as a packaging film.

10. Use of the multi-layer film according to one or more of claims 1 to 7 for the production of laminates, preferably laminates with paper, cardboard, metals, metallised synthetic plastics films and synthetic plastic films.

11. Laminates containing a multi-layer film according to one or more of claims 1 to 7.

12. Packagings containing a multi-layer film according to one or more of claims 1 to 7.

**Revendications**

1. Feuille multicouche polyoléfinique soumise à une orientation biaxe, comprenant une couche de base qui contient du polypropylène, et au moins une couche de recouvrement, caractérisée en ce que la couche de recouvrement contient, à concurrence d'au moins 70 à 100% en poids rapportés au poids de la couche de recouvrement, un copolymère en $C_3/C_4$ faiblement cristallin possédant une teneur en $C_3$ de 60 à 85% en poids et une teneur en $C_4$ de 15 à 40% en poids chaque fois rapportés au copolymère, la couche de recouvrement présentant une température d'amorçage du thermosoudage inférieure à 84°C et l'épaisseur de la couche de recouvrement s'élevant à une valeur de 0,4 à 1,5 µm.

2. Feuille multicouche selon la revendication 1, caractérisée en ce que la température d'amorçage du thermosoudage se situe dans le domaine de 60 à 80°C et le copolymère présente une température de fusion inférieure à 130°C, de préférence de 105 à 120°C.

3. Feuille multicouche selon la revendication 1 et/ou 2, caractérisée en ce que le copolymère présente une température de recristallisation inférieure à 80°C, de préférence de 55 à 70°C, et une enthalpie de fusion <67 J/g, de préférence de 50 à 60 J/g.

4. Feuille multicouche selon une ou plusieurs des revendications 1 à 3, caractérisée en ce que le copolymère présente une teneur en propylène de 70 à 80 moles %, de préférence de 75 moles % et une teneur en butène-1 de 20 à 30 moles %, de préférence de 25 moles % chaque fois rapportés au copolymère.

5. Feuille multicouche selon une ou plusieurs des revendications 1 à 4, caractérisée en ce qu'elle est transparente.

6. Feuille multicouche selon une ou plusieurs des revendications 1 à 4, caractérisée en ce qu'elle est opaque.

7. Feuille multicouche selon une ou plusieurs des revendications 1 à 6, caractérisée en ce que la couche de base contient un agent antistatique, de préférence une amine aliphatique tertiaire, et la couche de recouvrement contient un agent s'opposant à l'adhérence de contact entre feuilles, de préférence du $SiO_2$ possédant une granulométrie de 4 à 6 µm.

8. Procédé pour la fabrication de la feuille multicouche selon la revendication 1, dans lequel on soumet les masses fondues correspondant aux couches individuelles de la feuille à une coextrusion à travers une filière pour feuille, on tend la feuille coextrudée par-dessus un rouleau tendeur dont la température se situe entre 10 et 90°C, on soumet la feuille à un étirage biaxe avec un rapport d'étirage en direction longitudinale de 4:1 à 7:1 et en direction transversale de 6:1 à 11:1, on soumet la feuille après son étirage biaxe à un thermofixage, on la soumet le cas échéant à un traitement par effluves négatives et enfin on l'enroule.

9. Utilisation de la feuille multicouche selon une ou plusieurs des revendications 1 à 7 à titre de feuille d'emballage.

10. Utilisation de la feuille multicouche selon une ou plusieurs des revendications 1 à 7 pour la fabrication de stratifiés, de préférence de stratifiés avec du papier, du carton, des métaux, des feuilles en matières synthétiques métallisées et des feuilles en matières synthétiques.

11. Stratifiés contenant une feuille multicouche selon une ou plusieurs des revendications 1 à 7.

12. Emballages contenant une feuille multicouche selon une ou plusieurs des revendications 1 à 7.